**Europäisches Patentamt**

**European Patent Office**

**Office européen des brevets**

(19)

(11) **EP 1 439 195 A2**

(12) **DEMANDE DE BREVET EUROPEEN**

(43) Date de publication:
**21.07.2004 Bulletin 2004/30**

(51) Int Cl.[7]: **C08F 2/10**

(21) Numéro de dépôt: **04075332.9**

(22) Date de dépôt: **10.07.1997**

(84) Etats contractants désignés:
**AT BE CH DE DK ES FI FR GB GR IE IT LI LU NL PT SE**

(30) Priorité: **19.07.1996 FR 9609345**

(62) Numéro(s) de document de la (des) demande(s) initiale(s) en application de l'article 76 CBE:
**97420113.9 / 0 819 704**

(71) Demandeur: **COATEX S.A.S.**
**69730 Genay (FR)**

(72) Inventeurs:
• **Egraz, Jean-Bernard**
**69130 Ecully (FR)**

• **Suau, Jean-Marc**
**69480 Lucenay (FR)**
• **Kensicher, Yves**
**69380 Lozanne (FR)**

(74) Mandataire: **Richebourg, Michel François**
**Cabinet Michel Richebourg,**
**"Le Clos du Golf",**
**69, rue Saint-Simon**
**42000 Saint Etienne (FR)**

Remarques:
Cette demande a été déposée le 03 - 02 - 2004 comme demande divisionnaire de la demande mentionnée sous le code INID 62.

(54) **Polymères hydrosolubles résiduels a faible teneur en monomères et leurs utilisations**

(57) Homopolymères et/ou copolymères en solution aqueuse de l'ancienne rev. 8.

**EP 1 439 195 A2**

**Description**

L'invention concerne de nouveaux homopolymères et/ou copolymères, en solution aqueuse de monomères mono éthyléniquement insaturés tels que les monomères acryliques et/ou vinyliques permettant d'obtenir des taux de monomères résiduels inférieurs ou égaux pour chacun à 300 ppm mesuré par rapport au produit en l'état à concentration au moins égale a 38 % quel que soit le monomère et dès la fin de la polymérisation, c'est-à-dire sans avoir à les traiter ultérieurement.

L'invention concerne également leur utilisation comme agent de broyage et/ou de dispersion en suspension aqueuse de matériaux minéraux, ou bien encore comme séquestrant ou inhibiteur de précipitation et/ou d'incrustations minérales notamment sur les surfaces de transferts thermiques des installations industrielles ou domestiques ou encore comme agent fluidifiant de suspensions aqueuses à base d'eau douce ou saline utilisées couramment comme fluides de forage dans les domaines du génie civil, du bâtiment, des travaux publics, de la prospection et de l'extraction pétrolière ou bien encore comme stabilisant de suspensions de zéolithe ainsi que comme agent anti-tartre et dispersant ne déstabilisant pas le degré chlorométrique des composés hypochlorites présents dans les formulations détergentes le contenant ainsi que comme builder des compositions détergentes ou encore comme agent de rétention d'eau dans l'industrie papetière.

L'invention concerne enfin les dites suspensions aqueuses de matériaux minéraux stables dans le temps et fortement concentrées en matières minérales ainsi que leur utilisation dans le domaine du papier, de la peinture, des formulations détergentes et nettoyantes, et tout autre domaine mettant en oeuvre les dites suspensions telles que notamment la céramique ou les fluides de forage.

Depuis longtemps déjà l'homme de l'art connaît divers procédés pour homopolymériser en solution les monomères acryliques et/ou vinyliques tels que notamment l'acide acrylique, l'acide méthacrylique, l'anhydride maléique ou bien encore l'acrylamide ainsi que pour copolymériser en solution dans l'eau, l'acide acrylique avec d'autres monomères monoéthyléniquement insaturés tels que par exemple l'anhydride maléique, l'acide itaconique, l'acrylamide, l'acide acrylamido méthyl propane sulfonique, les esters acryliques mais aucun de ces procédés ne le satisfait pleinement à l'égard des tendances et/ou des contraintes réglementaires actuelles relatives à l'environnement et notamment celles concernant le taux de monomères résiduels dans le polymère utilisé ou bien encore sur leur coloration ou leur odeur.

Ainsi les brevets EP 0 668 298 et EP 0 608 845 décrivent des procédés de copolymérisation, qui sans post-traitement aboutissent à des taux de monomères résiduels supérieurs à 1000 ppm et ne sauraient convenir totalement aux nouvelles demandes du marché.

D'autres, comme le EP 0 618 240 qui révèle, quant à lui, un procédé permettant d'obtenir des taux de monomères résiduels inférieurs ou comme les EP 0 398 724, EP 0 510 831 ou bien encore EP 0 663 408, ont tous l'inconvénient de mettre en oeuvre ou bien des réactions de décomposition de l'eau oxygénée en présence de sels métalliques telles que notamment la réaction de Fenton aboutissant ainsi à des produits souvent colorés et contenant des sels métalliques susceptibles d'engendrer des problèmes écologiques ou bien de décomposition thermique ou rédox de persulfate aboutissant à des produits ayant l'inconvénient de contenir du soufre ou bien encore de faire appel à des initiateurs organiques tels que par exemple des peroxydes organiques, notamment de benzoyle, ayant l'inconvénient de générer des sous-produits organiques non désirés voire des composés azotés non souhaités.

De même l'homme de l'art dispose du brevet US 4 301 266 qui décrit un procédé de fabrication de polymères d'acide acrylique ayant l'inconvénient de nécessiter la mise en oeuvre de solvant du type isopropanol ainsi que de nécessiter un travail sous pression.

Enfin l'homme de l'art connaît encore le brevet US 4 621 127 décrivant un procédé de copolymérisation coûteux car très long et nécessitant la mise en oeuvre de régulateurs de chaînes pour obtenir des polymères de bas poids moléculaires.

Confrontée à ces divers inconvénients qui ne peuvent satisfaire pleinement l'homme de l'art, la Demanderesse a trouvé un procédé d'obtention de nouveaux homopolymères et/ou copolymères, en solution aqueuse de l'un au moins des monomères ou comonomères choisis parmi l'acide acrylique et/ou méthacrylique, itaconique, crotonique, fumarique, anhydride maléique ou encore, isocrotonique, aconitique, mésaconique, sinapique, undécylénique, angélique et/ou leurs esters respectifs, l'acide acrylamido méthyl propane sulfonique, l'acroléine, l'acrylamide et/ou méthacrylamide, le méthacrylamido propyl triméthyl ammonium chlorure ou sulfate, le méthacrylate de triméthyl ammonium éthyl chlorure ou sulfate, ainsi que leurs homologues en acrylate et en acrylamide quaternisés ou non et/ou le diméthyldiallylchlorure, le méthallylsulfonate de sodium, le phosphate de méthacrylate ou acrylate d'éthylène ou propylène glycol, la vinylpyrrolidone possédant un taux de monomères résiduels inférieur ou égal pour chacun à 300 ppm mesuré par rapport au produit en l'état à concentration au moins égale à 38 % sans avoir besoin de mettre en oeuvre un post-traitement du produit obtenu.

Ce procédé permettant d'obtenir des polymères en solution incolores, inodores et présentant une très faible teneur en monomères résiduels et en sous produits organiques indésirables fait l'objet de la demande principale 97420113.9.

Un autre but de l'invention est de fournir un agent de broyage et/ou de dispersion en suspension aqueuse de matériaux minéraux permettant d'aboutir à des dispersions aqueuses de particules minérales qui sont fortement concentrées en matière minérale et ont une viscosité faible et stable dans le temps, même sans agitation.

En outre un autre but de l'invention est de fournir un agent séquestrant ou inhibiteur de précipitation et/ou d'incrustations minérales lorsque le poids moléculaire des dits homopolymères et/ou copolymères est suffisamment faible pour être adapté à la dite application.

Outre ces buts, un objet supplémentaire de l'invention est d'obtenir un agent fluidifiant de suspensions aqueuses utilisées comme fluides de forage ou encore de mettre au point un stabilisant de suspensions aqueuses de zéolithes ainsi que d'obtenir un agent anti-tartre et dispersant ne déstabilisant pas le degré chlorométrique des composés hypochlorites présents dans les compositions détergentes le contenant ou bien encore d'un builder.

Enfin, un autre but de l'invention concerne l'utilisation de ces suspensions aqueuses minérales dans les domaines de la charge de masse et du couchage du papier ainsi que de la peinture, de la céramique, de la détergence et des boues de forage.

Ces buts sont atteints grâce au procédé décrit dans la demande principale, par la mise en oeuvre de composés contenant un atome de phosphore de degré d'oxydation inférieur à 5 introduits en quantité molaire allant de 0,005 à 0,49 atome de phosphore par mole d'insaturation à polymériser, de préférence avant le démarrage de la polymérisation comme charge en pied de cure du réacteur, en présence d'eau oxygénée et en l'absence de tout agent de décomposition de l'eau oxygénée en radicaux libres comme par exemple les métaux ou sels métalliques nécessaires pour l'homme du métier, à la décomposition de l'eau oxygénée ainsi que de tout autre générateur de radicaux libres ainsi qu'en l'absence de tout persel et/ou tout autre agent de transfert.

En effet, alors que l'art antérieur propose des procédés de polymérisation faisant appel à des réactions de décomposition de l'eau oxygénée du type de celle de Fenton ou encore à des réactions de décomposition thermique ou rédox des initiateurs couramment utilisés, il a été trouvé, de manière surprenante, que la mise en oeuvre d'un composé contenant l'atome de phosphore à un degré d'oxydation inférieur à 5 en quantité molaire allant de 0,005 à 0,49 atome de phosphore par mole d'insaturation permet d'effectuer l'homopolymérisation du monomère tel que l'acide acrylique, l'acide méthacrylique, l'acide maléique ou bien encore de le copolymérisation de l'acide maléique ou tout autre monomère précité avec l'acide acrylique ou tout autre monomère précité à l'aide d'ajout d'eau oxygénée uniquement, et en l'absence de tout agent de décomposition de l'eau oxygénée en radicaux libres tels que par exemple les métaux ou sels métalliques et notamment les sels de cuivre, de fer, de cobalt, de nickel, de zinc, de tungstène, de cérium, de molybdène, de zirconium ou leurs mélanges nécessaires habituellement à la réaction de décomposition de l'eau oxygénée comme par exemple la réaction bien connue dite de Fenton ou bien encore en l'absence d'initiateur organique tel que par exemple les péroxydes de benzoyle ou en l'absence de persel tel que par exemple le persulfate ou bien encore en l'absence de tout autre agent de transfert tel que par exemple les composés thio, les alcools, les halogénures, les amines ou autres.

Ce procédé selon la demande principale 97420113.9 déposée le 10/07/1997 permet ainsi d'effectuer la polymérisation ou copolymérisation en phase aqueuse, de manière continue, semi-continue ou par batch et d'aboutir à un nouveau polymère ayant une teneur en monomères résiduels inférieure ou égale pour chacun à 300 ppm mesuré par rapport au produit en l'état à concentration au moins égale à 38 % quel que soit le rapport pondéral des monomères et sans avoir besoin de recourir après la fin de la polymérisation aux traitements habituels bien connus de l'homme du métier tels que par exemple la distillation ou bien encore l'ajout après polymérisation d'un excés d'oxydant ou de réducteur.

Ainsi le procédé de la demande principale d'obtention d'homopolyméres et/ou copolymères, en solution aqueuse, de monomères éthyléniquement insaturés tels que les monomères acryliques et/ou vinyliques se caractérise par la mise en oeuvre de composés contenant un atome de phosphore de degré d'oxydation inférieur à 5 en quantité molaire allant de 0,005 à 0,49 atome de phosphore par mole d'insaturation à polymériser en présence d'eau oxygénée et en l'absence de tout agent de décomposition de l'eau oxygénée en radicaux libres et de tout autre générateur de radicaux libres ainsi qu'en l'absence de tout persel ou de tout autre agent de transfert et se caractérise plus particulièrement en ce que tout ou partie de la quantité nécessaire du composé contenant l'atome de phosphore d'un degré d'oxydation inférieur à 5 est introduite avant le début de la polymérisation comme charge dans le pied de cuve du réacteur en présence éventuellement de tout ou partie du ou des monomères à polymériser à l'état acide ou éventuellement partiellement ou totalement neutralisés au moyen d'une solution basique et en ce que la réaction d'obtention des polymères et/ou copolymères se déroule sans ajout de métaux et/ou de sels métalliques initiant la décomposition de l'eau oxygénée.

Dans le procédé de la demande principale, la réaction de copolymérisation se réalise, quel que soit le rapport pondéral des monomères par la mise en oeuvre comme charge dans le pied de cuve du réacteur de tout ou partie de la quantité du composé contenant l'atome de phosphore d'un degré d'oxydation inférieur à 5 choisi parmi l'hypophosphite de sodium ou l'acide hypophosphoreux en quantité déterminée en fonction du poids moléculaire souhaité pour le polymère, en présence éventuellement de tout ou partie du ou des monomères à polymériser à l'état acide ou éventuellement partiellement ou totalement neutralisés au moyen d'une solution basique complétée de manière générale d'une quantité d'eau nécessaire pour obtenir une solution homogène.

Les bases utilisées peuvent être l'hydroxyde de sodium, l'hydroxyde de potassium, ou de lithium ou bien de magnésium ou de calcium.

Elles peuvent être ajoutées sous forme de solution mais aussi sous forme de pastilles.

Il est à noter également que dans le procède de la demande principale , le poids moléculaire du copolymère souhaité n'est pas directement fonction de la quantité d'eau oxygénée utilisée mais plutôt du taux de phosphore mis en jeu ainsi que de la concentration du milieu.

De même l'obtention d'homopolymère de l'acide acrylique, de l'acide méthacrylique ou de l'acide maléique se réalise, dans le procédé selon l'invention par la mise en oeuvre du monomère, de l'eau oxygénée, du composé contenant un atome de phosphore de degré d'oxydation inférieur à 5, d'eau et éventuellement d'une ou plusieurs bases citées plus haut et plus particulièrement par l'injection de l'eau oxygénée dans le réacteur chauffé et préalablement chargé de tout ou partie de la quantité du monomère à polymériser, du composé contenant l'atome de phosphore choisi parmi l'hypophosphite de sodium ou l'acide hypophosphoreux en quantité déterminée en fonction du poids moléculaire souhaité ainsi que d'une quantité d'eau nécessaire de manière à obtenir une solution homogène et ce en présence d'une ou plusieurs bases citées plus haut.

Puis à la fin de la réaction d'homopolymérisation ou de copolymérisation d'une durée préférentielle de 2 heures ou moins, le polymérisat obtenu est refroidi puis récupéré tel quel pour être utilisé sous cette forme.

Il peut être également partiellement ou totalement neutralisé par un ou plusieurs agents de neutralisation disposant d'une fonction monovalente ou d'une fonction polyvalente tels que par exemple ceux choisis dans le groupe constitué par les cations alcalins, en particulier le sodium, le potassium, l'ammonium ou les amines primaires, secondaires ou tertiaires aliphatiques et/ou cycliques telles que par exemple les éthanolamines (mono-, di-, triéthanolamine), la mono et diéthylamine, la cyclohexylamine, la méthylcyclohexylamine ou bien encore ceux choisis dans le groupe constitué par les cations divalents alcalino-terreux, en particulier le magnésium et le calcium, ou encore le zinc, de même que par les cations trivalents, dont en particulier l'aluminium, ou encore, par certains cations de valence plus élevée ainsi que des amines primaires et secondaires, aliphatiques et/ou cycliques telles que par exemple les mono et diéthylamines, les cyclo et méthylcyclohexylamines ainsi que leurs combinaisons.

Le polymérisat obtenu peut aussi être traité par tout moyen connu pour en éliminer l'eau et l'isoler sous la forme d'une fine poudre et l'utiliser sous cette forme.

Les nouveaux polymères obtenus selon l'invention se caractérisent en ce que le taux de monomères résiduels est inférieur ou égal pour chacun à 300 ppm mesuré par rapport au produit en l'état à une concentration en matière sèche au moins égale à 38 % quelle que soit la composition en monomère.

Le taux de monomères résiduels est déterminé par une méthode HPLC à étalonnage interne mettant en oeuvre un ensemble HPLC équipé d'un détecteur UV, visible permettant de travailler entre 180 et 220 nanomètres et d'une colonne chromatographique Microbondapak.

Les homopolymères et/ou copolymères selon l'invention et destinés à être utilisés selon l'invention comme agent de dispersion et/ou de broyage ou bien encore comme fluidifiant pour boues de forage on comme modificateur de rhéologie de compositions détergentes ont généralement une viscosité spécifique au plus égale à 10, et de préférence au plus égale à 3.

De même lorsque le polymère et/ou copolymère selon l'invention, obtenu par le procédé de l'invention est mis en oeuvre dans le traitement des eaux industrielles et/ou domestiques dans le but de conférer à ces milieux des effets anti-tartre et anti-corrosion par exemple ou bien alors est mis en oeuvre dans le domaine de l'osmose inverse et de l'ultrafiltration dans le but de complexer les cations présents, sa viscosité spécifique est comprise entre 0,10 et 10.

Cette viscosité spécifique des copolymères est symbolisée par la lettre "μ" et est déterminée de la manière suivante.

On prend une solution de polymérisat de façon à obtenir une solution correspondant à 2,5 g de polymère sec et à 50 ml d'une solution d'eau bipermutée. Puis, on mesure avec un viscosimètre capillaire de constante de Baume égale à 0,000105 placé dans un bain thermostaté à 25°C le temps d'écoulement d'un volume donné de la solution précitée contenant le copolymère, ainsi que le temps d'écoulement du même volume de la solution aqueuse d'eau bipermutée dépourvue dudit copolymère. Il est alors possible de définir la viscosité "μ" grâce à la relation suivante :

$$\mu = \frac{\text{(temps d'écoulement de la solution de polymère)} - \text{(temps d'écoulement de la solution d'eau permutée)}}{\text{temps d'écoulement de la solution d'eau permutée}}$$

Il est à noter que pour les homopolymères de l'acide acrylique, la mesure de la viscosité spécifique est déteminée par la comparaison du temps d'écoulement d'un volume donné d'une solution de 2,5 g du polyacrylate de sodium sec dans 50 ml d'une solution de chlorure de sodium à 60 g/l au temps d'écoulement du même volume de solution aqueuse de chlorure de sodium dépourvue dudit polyacrylate et que la viscosité µ est alors :

$$\mu = \frac{\text{(temps d'écoulement de la solution polymère) - (temps d'écoulement de la solution NaCl)}}{\text{temps d'écoulement de la solution NaCl}}$$

Dans les deux cas, le tube capillaire est généralement choisi de telle manière que le temps d'écoulement de la solution d'eau bipermutée ou de NaCl, dépourvue de polymère et/ou copolymère, soit d'environ 90 à 100 secondes, donnant ainsi des mesures de viscosité spécifique d'une très bonne précision.

En pratique l'opération de délitage de la substance minérale à disperser consiste à préparer sous agitation une solution aqueuse de l'agent de dispersion selon l'invention dans laquelle est introduite la substance minérale à disperser qui peut être d'origines très diverses telles que le carbonate de calcium naturel ou synthétique, les dolomies, le sulfate de calcium, le dioxyde de titane, les pigments lamellaires tels que par exemple le mica, le kaolin c'est-à-dire toutes les substances minérales qui doivent être mises en suspension et dispersées pour être utilisables dans des applicacions aussi diversifiées que l'enduction des papiers, la pigmentation des peintures, la céramique, les fluides de forage ou encore la détergence.

De même en pratique, l'opération de broyage de la substance minérale à affiner consiste à broyer la substance minérale avec un corps broyant en particules très fines dans un milieu acqueux contenant l'agent de broyage. On forme une suspension aqueuse de la substance minérale à broyer, dont les grains ont une dimension initiale au plus égale à 50 microns, en une quantité telle que la concentration en manière sèche de ladite suspension est d'au moins 70 % en poids.

A la suspension de la substance minérale à broyer, on ajoute le corps broyant de granulométrie avantageusement comprise entre 0,20 et 4 millimètres. Le corps broyant se présente en général sous la forme de particules de matériaux aussi divers que l'oxyde de silicium, l'oxyde d'aluminium, l'oxyde de zirconium ou de leurs mélanges, ainsi que les résines synthétiques de haute dureté, les aciers, ou autres. Un exemple de composition de tels corps broyants est donné par le brevet FR 2 303 681 qui décrit des éléments broyants formés de 30 à 70 % en poids d'oxyde de zirconium, 0,1 à 5 % d'oxyde d'aluminium et de 5 à 20 % d'oxyde de silicium. Le corps broyant est de préférence ajouté à la suspension en une quantité telle que le rapport en poids entre ce matériau de broyage et la substance minérale à broyer soit d'au moins 2/1, ce rapport étant de préférence compris entre les limites 3/1 et 5/1.

Le mélange de la suspension et du corps broyant est alors soumis à l'action mécanique de brassage, telle que celle qui se produit dans un broyeur classique à micro-éléments.

L'agent de broyage et/ou de dispersion selon l'invention est également introduit au sein du mélange formé par la suspension aqueuse de substances minérales et par le corps broyant à raison de 0.2 à 2 % en poids de la fraction séchée desdits polymères par rapport à la masse sèche de la substance minérale à affiner.

Le temps nécessaire pour aboutir à une excellente finesse de la substance minérale après broyage varie selon la nature et la quantité des substances, minérales à broyer, et selon le mode d'agitation utilisé et la température du milieu pendant l'opération de broyage.

La portée et l'intérêt de l'invention seront mieux perçus grâce aux exemples suivants qui ne sauraient être limitatifs :

Exemple 1 :

Cet exemple a pour but d'illustrer l'obtention d'homopolymères de l'acide acrylique en l'absence de tout métal ou sel métallique et par ajout simultané et en parallèle d'acide acrylique et d'eau oxygénée dans un réacteur de polymérisation préalablement chauffé et rempli d'une charge composée d'eau, éventuellement d'une partie ou de la totalité de l'hypophosphite ou de l'acide hypophosphoreux nécessaire et éventuellement d'une partie de l'acide acrylique éventuellement partiellement neutralisé par de la soude.

Essai n° 1 :

Dans ce but, dans un réacteur en verre de 2 litres équipé d'une agitation, d'un thermomètre et d'un système de refroidissement, on prépare à température ambiante une charge appelée pied de cuve et composée de 132 grammes d'acide acrylique à 100 %, 132 grammes de soude à 50 %, 77 grammes d'hypophosphite de sodium et 260 grammes d'eau.

Pendant la montée en température du pied de cuve, on prépare les 2 charges à introduire en parallèle pendant deux heures.

Dans ce but on introduit dans un premier bécher 1024 grammes d'acide acrylique à 100 % et dans un deuxième bécher 40 grammes d'eau oxygénée à 130 volumes et 120 grammes d'eau.

Après deux heures d'ajout à 95°C, on obtient un polymérisat en solution limpide et incolore. Ce polymérsat est alors neutralisé totalement par ajout de sonde à 50 % jusqu'à pH = 8,6. Le polyacrylate ainsi obtenu correspond à un homopolymère selon l'invention de viscosité spécifique égale à 0,64 et de concentration en matière sèche de 50,6 % dont la teneur en acide acrylique résiduel est de 260 ppm mesurée par rapport au produit en l'état et selon la méthode HPLC précitée.

Essai n° 2 :

Cet essai est effectué avec le même matériel, le même mode opératoire et les mêmes quantités de reactif que l'essai n° 1 à l'exception de la quantité d'eau oxygénée à 130 volumes introduite qui passe de 3,46 % en poids par rapport à l'acide acrylique à 6,9 % en poids.

Le polyacrylate selon l'invention, incolore, possède une viscosité spécifique égale à 0,70 et après neutralisation à pH = 8,6 une concentration en matière sèche de 45,4 %, une teneur en acide acrylique résiduel de 10 ppm mesurée par rapport au produit en l'état et selon la même méthode que celle de l'essai n° 1.

Essai n° 3 :

Cet essai est effectué avec le même matériel et le même mode opératoire que l'essai n° 1 en mettant en oeuvre une quantité d'hypophosphite correspondant à 0,068 atome de phosphore par mole de monomère à polymériser et une quantité d'eau oxygénée correspondant à 1,73 % de la quantité totale d'acide acrylique.

Le polyacrylate selon l'invention, incolore, une viscosité spécifique égale à 0,41 et, après neutralisation à pH = 8,6, une concentration en matière sèche de 45,2 %, et une teneur en acide acrylique résiduel de 24 ppm mesurée par rapport en produit en l'état et selon la même méthode que celle de l'essai n° 1.

Essai n° 4 :

Cet essai est effectué avec le même matériel et le même mode opératoire que l'essai n° 1 en faisant varier la concentration du pied de cuve en acide acrylique ainsi que la quantité d'eau. La concentration massique du pied de cuve en monomère et en hypophosphite de sodium est de 26,5 % et la quantité d'eau oxygénée ajoutée correspond à 1,73 % de la quantité totale de l'acide acrylique.

La solution incolore obtenue par le procédé selon l'invention est un polyacrylate selon l'invention qui possède une viscosité spécifique égale à 0,57 et après neutralisation à pH = 8,6 avec de la soude à 50 % une concentration en matière sèche de 43,5 %, et une teneur en acide acrylique résiduel inférieure à 10 ppm mesurée selon la même méthode que celle de l'essai n° 1.

Essai n° 5 :

Cet essai est effectué avec le même matériel, le même mode opératoire et les mêmes quantités de réactif que l'essai précédent à l'exception de la quantité d'eau oxygénée qui correspond à 3,46 % de la quantité totale de l'acide acrylique.

Le polymère selon l'invention est un polyacrylate incolore de viscosité spécifique égale à 0,53, qui après neutralisation à pH = 8,6 avec de la soude à 50 %, a une concentration en matière séche de 43,6 %, et une teneur en acide acrylique résiduel de 70 ppm mesurée par rapport au produit en l'état et selon la méthode HPLC précitée.

Essai n° 6 :

Cet essai est effectué avec le même matériel, le même mode opératoire et les mêmes quantités de réactif que l'essai précédent à l'exception de la quantité d'eau oxygénée ajoutée qui correspond à 6,9 % par rapport à la quantité totale d'acide acrylique.

La solution incolore obtenue par le procédé selon l'invention est un polyacrylate selon l'invention qui possède une viscosité spécifique égale à 0,66 et, après neutralisation à pH = 8,6 avec de la soude à 50 %, une concentration en matière sèche de 41,6 %, une teneur en acide acrylique résiduel égale à 120 ppm mesurée par rapport au produit en l'état et selon la même méthode que celle des essais précédents.

Essai n° 7 :

Cet essai est effectué avec le même matériel et le même mode opératoire que ceux utilisés dans l'essai précédent à l'exception du pied de cuve qui ne contient que de l'eau et à l'exception de la quantité d'ajout d'eau oxygénée qui correspond à 3,46 % par rapport à la quantité d'acide acrylique ajoutée en parallèle.

Le polymère selon l'invention est une solution incolore d'un acide polyacrylique de viscosité spécifique égale à 0,82 qui après une neutralisation jusqu'à pH = 8,6 avec de la soude à 50 % possède une teneur en matière sèche égale à 44,6 %, et une teneur en acide acrylique résiduel de 120 ppm mesurée par rapport au produit en l'état et selon la méthode utilisée pour les essais précédents.

Essai n° 8 :

Cet essai est effectué avec le même matériel que l'essai n° 7. Ainsi, on prépare à température ambiante une charge appelée pied de cuve et composée de 35 grammes d'hypophosphite de sodium et 500 grammes d'eau.
Parallèlement on prépare les 2 charges à introduire simultanémemt dans le réacteur chauffé à reflux.
Dans ce but on introduit dans un premier bécher 462 grammes d'acide acrylique à 100 % et dans un deuxième bécher 37 grammes d'eau oxygénée à 130 volumes et 63 grammes d'eau.
Après deux heures d'ajout, on obtient selon le procédé de l'invention un acide polyacrylique limpide et incolore de viscosité spécifique égale à 0,55.
Après neutralisation à pH = 8,6 par ajout de soude à 50 %, le polyacrylate obtenu a une concentration en matiére sèche de 38,4 %, et une teneur en acide acrylique résiduel de 190 ppm mesurée par rapport au produit en l'état et selon la méthode utilisée pour les essais précédents.

Essai n° 9 :

Cet essai est identique à l'essai précédent à l'exception du fait qu'un quart seulement de la quantité d'hypophosphite de sodium est chargé dans le réacteur comme pied de cuve.
L'acide polyacrylique obtenu selon le procédé de l'invention est limpide et incolore de viscosité spécifique égale à 0.53.
Après neutralisation à pH = 8,6 par ajout de soude à 50 %, le polyacrylate obtenu a une concentration en matière sèche de 38,4 % et une teneur en acide acrylique résiduel inférieure à 10 ppm mesurée par rapport au produit en l'état et selon la méthode utilisée pour les essais précédents.

Essai n° 10 :

Cet essai, effectué à l'aide du même matériel que celui utilisé dans les essais précédents, met en oeuvre :

- une charge appelée pied de cuve composée de 130 grammes d'eau, 30 grammes d'acide acrylique à 100 %, 30 grammes de soude à 50 % et de la totalité de la masse d'hypophosphite de sodium correspondant à 0,024 atome de phosphore par mole d'acide acrylique
- deux charges introduites en parallèle contenant l'une 467 grammes d'acide acrylique à 100 % et l'autre 10 grammes d'eau oxygénée à 130 volumes et 190 grammes d'eau.

Le polyacrylate obtenu avec le même mode opératoire que précédemment décrit est un polyacrylate selon l'invention, limpide et incolore, de viscosité spécifique égale à 1,52.
Après neutralisation à pH = 8,6 par ajout de soude à 50 %, le polyacrylate obtenu a une concentration en matière sèche de 50,7 % et une teneur en acide acrylique résiduel inférieur à 20 ppm mesurée par rapport au produit en l'état et selon la méthode utilisée pour les essais précédents.

Essai n° 11 :

Cet essai, effectué à l'aide du même matériel que celui utilisé dans les essais précédents, met en oeuvre, un pied de cuve contenant 340 grammes d'eau et le quart de la masse totale d'hypophosphite de sodium correspondant à 0,012 atome de phosphore par mole d'acide acrylique ainsi que deux charges introduites en parallèle l'une contenant 400 grammes d'acide acrylique à 100 %, 200 grammes d'eau et le reste de la masse totale d'hypophosphite de sodium correspondant à 0.012 atome de phosphore par mole d'acide acrylique, l'autre contenant 3,3 grammes d'eau oxygénée à 130 volumes et 250 grammes d'eau.
L'acide polyacrylique obtenu avec le même mode opératoire que précédemment décrit est un acide polyacrylique obtenu selon l'invention, limpide et incolore, de viscosité spécifique égale à 2,4.
Après neutralisation à pH = 8,6 par ajout de soude à 50 %, le polyacrylate selon l'invention a une concentration en matière sèche de 38 % et une teneur en acide acrylique résiduel de 200 ppm mesurée par rapport au produit en l'état et selon la méthode utilisée pour les essais précédents.

Essai n°12 :

Cet essai est effectué avec le même matériel et le même mode opératoire que ceux utilisés dans l'essai précédent à l'exception d'une part de la masse totale d'hypophosphite de sodium mise en oeuvre et qui correspond à 80 % de la masse utilisée dans l'essai précédent, d'autre part de la masse d'eau oxygénée qui correspond au double de la masse d'eau oxygénée mise en oeuvre dans l'essai précédent.

L'acide polyacrylique obtenu est un acide polyacrylique selon l'invention, limpide et incolore, de viscosité spécifique égale à 3,0.

Après neutralisation à pH = 8,6 par ajout de soude à 50 %,polyacrylate selon l'invention a une concentration en matière sèche de 38 % et une teneur en acide acrylique résiduel de 300 ppm mesurée par rapport au produit en l'état et selon la méthode utilisée pour les essais précédents.

Essai n° 13 :

Cet essai est effectué avec le même matériel et le même mode opératoire que ceux utilisés dans l'essai précédent à l'exception d'une part de la masse totale d'hypophosphite de sodium mise en oeuvre et qui correspond à 0,0077 atome de phosphore par mole d'acide acrylique à polymériser, d'autre part de la masse d'eau oxygénée qui correspond à 78 % de la masse d'eau oxygénée mise en oeuvre dans l'essai n° 11.

L'acide polyacrylique obtenu est un acide polyacrylique selon l'invention, limpide et incolore, de viscosité spécifique égale à 4,8.

Après neutralisation à pH = 8,6 par ajout de soude à 50 %, le polyacrylate obtenu selon l'invention a une concentration en matière sèche de 38 % et une teneur en acide acrylique résiduel de 280 ppm mesurée par rapport au produit en l'état et selon la méthode utilisée pour les essais précédents.

Essai n° 14 :

Dans un réacteur en verre de 2 litres équipé d'une agitation, d'un thermomètre et d'un système de refroidissement, on prépare à température ambiante une charge appelée pied de cuve et composée de 600 grammes d'eau et un quart de la quantité d'acide hypophosphoreux correspondant à 0,09 atome de phosphore par mole d'acide acrylique à polymériser.

Pendant la montée en température du pied de cuve, on prépare les 2 charges à introduire en parallèle pendant deux heures.

Dans ce but on introduit dans un premier bécher 972 grammes d'acide acrylique à 100 % ainsi que les trois quarts restant de la quantité totale d'acide hypophosphoreux et dans un deuxième bécher 40 grammes d'eau oxygénée à 130 volumes et 120 grammes d'eau.

Après deux heures d'ajout à 95°C, on obtient un polymérisat en solution limpide et incolore. Ce polymérisat est alors neutralisé totalement par ajout de soude à 50 % jusqu'à pH = 8,6. Le polyacrylate ainsi obtenu correspond à un homopolymère selon l'invention de viscosité spécifique égale à 0,79 et de concentration en matière sèche de 46,6 % dont la teneur en acide acrylique résiduel est inférieure à 10 ppm mesurée par rapport un produit en l'état et selon la méthode HPLC précitée.

Exemple 2 :

Cet exemple a pour but d'illustrer le procédé, selon l'invention, d'obtention d'homopolymères de l'acide acrylique en l'absence de tout métal ou sel métallique et par ajout simultané et en parallèle d'acide acrylique et d'eau oxygénée dans un réacteur de polymérisation préalablement chauffé et rempli d'une charge composée d'eau, de la totalité de l'hypophosphite nécessaire et d'une partie de l'acide acrylique partiellement neutralisé par de la chaux ou de l'hydroxyde de magnésium.

Essai n° 15 :

Dans ce but, dans un réacteur en verre de 2 litres équipé d'une agitation, d'un thermomètre et d'un système de refroidissement, on prépare à température ambiante une charge appelée pied de cuve et composée de 132 grammes d'acide acrylique à 100 %, 61 grammes de chaux, 77 grammes d'hypophosphite de sodium et 260 grammes d'eau.

Pendant la montée en température du pied de cuve, on prépare les 2 charges à introduire en parallèle pendant deux heures.

Dans ce but on introduit dans un premier bécher 1024 grammes d'acide acrylique à 100 % et dans un deuxième bécher 40 grammes d'eau oxygénée à 130 volumes et 120 grammes d'eau.

Après deux heures d'ajout à 95°C, on obtient un polymérisat en solution limpide et incolore. Ce polymérisat est alors neutralisé totalement par ajout de soude à 50 % jusqu'à pH = 8,6. Le polyacrylate ainsi obtenu correspond à un homopolymère selon l'invention de viscosité spécifique égale à 0,55 et de concentration en matière sèche de 38 % dont la teneur en acide acrylique résiduel est inférieure à 30 ppm mesurée par rapport au produit en l'état et selon la méthode HPLC précitée.

Essai n° 16 :

Cet essai est effectué avec le même matériel et le même mode opératoire que ceux utilisés dans l'essai précédent à l'exception du fait que la chaux est remplacée par 48,83 g d'hydroxyde de magnésium.

Le polyacrylate, selon l'invention, incolore, possède une viscosité spécifique égale à 0,59 et après neutralisation à pH = 8.6 une concentration en matière sèche de 38 %, une teneur en acide acrylique résiduel de 280 ppm mesurée par rapport au produit en l'état et selon la même méthode que celle de l'essai n° 1.

Exemple 3 :

Cet exemple a pour but d'illustrer l'obtention d'homopolymères de l'anhydride maléique en l'absence de tout métal ou sel métallique ou bien encore de persels.

Essai n° 17 :

Dans ce but, dans un réacteur en verre de 2 litres équipé d'une agitation, d'un thermomètre et d'un système de refroidissement, on prépare à température ambiante une charge appelée pied de cuve et composée de 132 grammes d'anhydride maléique, 288 grammes de soude à 50 %, 82 grammes d'hypophosphite de sodium et 130 grammes d'eau.

Pendant la montée en température du pied de cuve jusqu'à ébullition, on prépare une charge contenant 10 gammes d'eau oxygénée à 130 volumes et 130 grammes d'eau.

Après deux heures d'ajout de cette charge dans le réacteur chauffé à ébullition on obtient un polymérisat en solution limpide et incolore.

Le polymaléate obtenu par le procédé de l'invention est un polymaléate selon l'invention, limpide, incolore, de viscosité spécifique égale à 0,12 qui, après neutralistidon jusqu'à pH = 8,6 avec de la soude à 50 %, a une concentration en matière sèche de 45,2 % et une teneur en anhydride maléique résiduel égale à 90 ppm mesurée par rapport au produit en l'état et selon la même méthode que celle, des essais précédents.

Essai n° 18 :

Cet essai est effectué avec le même matériel, le même mode opératoire et les mêmes quantités de réactif que l'essai n° 17 en doublant la quantité oxygénée ajoutée pendant 2 heures.

Le polymaléate selon l'invention est limpide et incolore et a une viscosité spécifique égale à 0,16 et, après neutralisation jusqu'à pH = 8,6 à l'aide de Soude à 50 %, possède une concentration en matière sèche de 44,9 % et une teneur en anhydride maléique résiduel égale à 230 ppm mesurée par rapport au produit en l'état et selon la même méthode que celle des essais précédents.

Exemple 4 :

Cet exemple a pour but d'illustrer, l'obtention de copolymères d'acide acrylique et d'acide maléique par ajout d'eau oxygénée en l'absence de tout métal ou sel métallique.

Essai n° 19 :

Dans ce but, dans un réacteur en verre de 2 litres équipé d'une agitation, d'un thermomètre et d'un système de refroidissement, on prépare à température ambiante une charge appelée pied de cuve et composée de 196 grammes d'anhydride maléique, 288 grammes de soude à 50 %, 82 grammes d'hypophosphite de sodium et 130 grammes d'eau.

Pendant la montée en température du pied de cuve, on prépare les 2 charges à introduire en parallèle pendant 2 heures.

Pour cela, on introduit dans un premier bécher 84 grammes d'acide acrylique à 100 % et dans un deuxième bécher 20 grammes d'eau oxygénée à 130 volumes et 130 grammes d'eau.

Après deux heures d'ajout à ébullition, on obtient un polymérisat en solution parfaitement limpide et incolore.

Le polymérisat ainsi obtenu est un copolymère selon l'invention, correspondant à un rapport pondéral en monomère de 30 % d'acide acrylique et 70 % d'anhydride maléique, de viscosité spécifique égale à 0,18 qui, après neutralisation jusqu'à pH = 8,6 à l'aide de soude à 50 %, possède une concentration en matière sèche égale à 52,2 % et des teneurs en anhydride maléique et acide acrylique résiduels respectivement égales à 300 ppm et 20 ppm mesurées par rapport au produit en l'état et selon la même méthode que celle des essais précédents.

Essai n° 20 :

Cet essai a pour but d'exemplifier un rapport pondéral en monomère différent du précédent.

Ainsi, dans un pied de cuve contenant les mêmes réactifs que ceux de l'essai précédent et en même quantité à l'exception de l'hypophosphite de sodium présent à raison de 18,38 % en poids par rapport au poids total des monomères et de l'hypophosphite, on ajoute dans les mêmes conditions opératoires et avec le même matériel que dans l'essai n° 19, d'une part une charge identique en eau oxygénée et d'autre part une charge d'acide acrylique à 100 % correspondant à un rapport pondéral en monomère de 46 % d'acide acrylique et 54 % d'anhydride maléique.

Le polymérisat ainsi obtenu est une solution limpide, incolore correspondant à un copolymère selon l'invention (46 % acide acrylique - 54 % anhydride maléique) de viscosité spécifique égale à 0,23 et qui après neutralisation jusqu'à pH = 8,6 avec de la soude à 50 % a une concentration en matière sèche égale à 50,8 % et des teneurs en anhydride maléique et acide acrylique résiduels sont respectivement égales à 300 ppm et 30 ppm mesurées par rapport au produit en l'état et selon la même méthode que celle des essais précédents.

Essai n°21 :

Cet essai a pour but d'exemplifier un autre rapport pondéral en monomère.

Ainsi, dans un pied de cuve contenant les mêmes réactifs que ceux de l'essai précédent et en même quantité à l'exception de l'hypophosphire de sodium présent à raison de 14,48 % en poids par rapport au poids total des monoméres et de l'hypophosphite, on ajoute dans les mêmes conditions opératoires et avec le même matériel que dans l'essai n° 19, d'une part une charge identique en eau oxygénée et d'autre part une charge d'acide acrylique à 100 % correspondant à un rapport pondéral en monomère de 60 % d'acide acrylique et 40 % d'anhydride maléique.

Le polymérisat ainsi obtenu est une solution limpide, incolore correspondant à un copolymère selon l'invention (60 % acide acrylique - 40 % anhydride maléique) de viscosité spécifique égale à 0,31 qui, après neutralisation jusqu'à pH = 8,6 avec de la soude à 50 %, a une concentration en matière sèche égale à 52,5 % et des teneurs en anhydride maléique et acide acrylique résiduels respectivement égales à 207 ppm et 20 ppm mesurées par rapport au produit en l'état et selon la même méthode que celle des essais précédents.

Essai n° 22 :

Cet essai a pour but d'exemplifier un autre rapport pondéral en monomère.

Ainsi, dans un pied de cuve contenant les mêmes réactifs que ceux de l'essai précédent et en même quantité à l'exception de l'hypophosphite de sodium présent à raison de 12,5 % en poids par rapport au poids total des monomères et de l'hypophosphite, on ajoute dans les mêmes conditions opératoires et avec le même matériel que dans l'essai n° 19, d'une part une charge identique en eau oxygénée et d'autre part une charge d'acide acrylique à 100 % correspondant à un rapport pondéral en monomère de 66.7 % d'acide acrylique et 33,3 % d'anhydride maléique.

Le polymérisat ainsi obtenu est une solution limpide, incolore correspondant à un copolymère selon l'invention (66,7 % acide acrylique - 33,3 % anhydride maléique) de viscosité spécifique égale à 0,33 qui, après neutralisation jusqu'à pH = 8,6 avec de la soude à 50 %, a une concentration en matière sèche égale à 43,8 % et des teneurs en anhydride maléique et acide acrylique résiduels respectivement égales à 120 ppm et 50 ppm mesurées par rapport au produit en l'état et selon la même méthode que celle des essais précédents.

Essai n° 23 :

Cet essai a pour but d'exemplifier un autre rapport pondéral en monomére.

Ainsi, dans un pied de cuve contenant les mêmes réactifs que ceux de l'essai précédent et en même quantité à l'exception de l'hypophosphite de sodium présent à raison de 9,67 % en poids par rapport au poids total des monomères et de l'hypophosphite, on ajoute dans les mêmes conditions opératoires et avec le même matériel que dans l'essai n° 19, d'une part une charge identique en eau oxygénée et d'autre part une charge d'acide acrylique à 100 % correspondant à un rapport pondéral en monomère de 75 % d'acide acrylique et 25 % d'anhydride maléique.

Le polymérisat ainsi obtenu est une solution limpide, incolore correspondant à un copolymère selon l'invention (75 % acide acrylique - 25 % anhydride maléique) de viscosité spécifique égale à 0,46 et qui, après neutralisation jusqu'à pH = 8,6 à l'aide de soude à 50 %, possède une concentration en matière sèche égale à 40,0 % et des teneurs en anhydride maléique et acide acrylique résiduels respectivement égales à 95 ppm et 40 ppm mesurées par rapport au produit en l'état et selon la même méthode que celle des essais précédents.

Essai n° 24 :

Cet essai a pour but d'exemplifier un autre rapport pondéral en monomère.

Ainsi, dans un pied de cuve contenant les mêmes réactifs que ceux de l'essai précédent et en mêmes quantités à l'exception de l'hypophosphite de sodium présent à raison de 7,24 % en poids par rapport au poids total des monomères et de l'hypophosphite, on ajoute dans les mêmes conditions opératoires et avec le même matériel que dans l'essai n° 19, d'une part une charge identique en eau oxygénée et d'autre part une charge d'acide acrylique à 100 % correspondant à un rapport pondéral en monomère de 83 % d'acide acrylique et 17 % d'anhydride maléique.

Le polymérisat ainsi obtenu est une solution limpide, incolore correspondant à un copolymère selon l'invention (83 % acide acrylique - 17 % anhydride maléique) de viscosité spécifique égale à 0,57 qui, après neutralisation jusqu'à pH = 8,6 à l'aide de soude à 50 %, possède une concentration en matière sèche égale à 41,8 % et des teneurs en anhydride maléique et acide acrylique résiduels respectivement égales à 53 ppm et 52 ppm mesurées par rapport au produit en l'état et selon la même méthode que celle des essais précédents.

Essai n°25 :

Cet essai a pour but d'exemplifier encore un autre rapport pondéral en monomère.

Ainsi, dans un pied de cuve contenant les mêmes réactifs que ceux de l'essai précédent et en même quantité à l'exception de l'hypophosphite de sodium présent à raison de 6,1 % en poids par rapport au poids total des monomères et de l'hypophosphite, on ajoute dans les mêmes conditions opératoires et avec le même matériel que dans l'essai n° 19, d'une part une charge identique en eau oxygénée et d'autre part une charge d'acide acrylique à 100 % correspondant à un rapport pondéral en monomère de 85 % d'acide acrylique et 15 % d'anhydride maléique.

Le polymérisat ainsi obtenu est une solution limpide et incolore correspondant à un copolymère selon l'invention (85 % acide acrylique - 15 % anhydride maléique) de viscosité spécifique égale à 0,77 qui, après neutralisation jusqu'à pH = 8,6 à l'aide de soude à 50 %, possède une concentration en matière sèche égale à 41,8 % et des teneurs en anhydride maléique et acide acrylique résiduels respectivement égales à 60 ppm et 35 ppm mesurées par rapport au produit en l'état et selon la même méthode que celle des essais précédents.

Essai n° 26 :

Cet essai a pour but d'exemplifier encore un autre rapport pondéral en monomère.

Ainsi, dans un pied de cuve contenant les mêmes réactifs que ceux de l'essai précédent et en mêmes quantité à l'exception de l'hypophosphite de sodium présent à raison de 5,77 % en poids par rapport au poids total des monoméres et de l'hypophosphite, on ajoute dans les mêmes conditions opératoires et avec le même matériel que dans l'essai n° 19, d'une part une charge identique en eau oxygénée et d'autre part une charge d'acide acrylique à 100 % correspondant à un rapport pondéral en monomère de 85,7 % d'acide acrylique et 14,3 % d'anhydride maléique,

Le polymérisat ainsi obtenu est une solution limpide et incolore correspondant à un copolymère selon l'invention (85,7 % acide acrylique - 14,3 % anhydride maléique) de viscosité spécifique égale à 1,55 qui, après neutralisation jusqu' à pH = 8,6 à l'aide de soude à 50 %, possède une concentration en matière sèche égale à 47,4 % et des teneurs en anhydride maléique et acide acrylique résiduels respectivement égales à 70 ppm et 235 ppm mesurées par rapport au produit en l'état et selon la même méthode que celle des essais précédents.

Essai n°27 :

Cet essai a pour but d'exemplifier un autre rapport pondéral en monomère ainsi que la mise en oeuvre, en pied de cuve, de la moitié de la quantité de soude à 50%.

Ainsi, dans un pied de cuve contenant les mêmes réactifs que ceux de l'essai précédent et en même quantité à l'exception de l'hypophosphite de sodium présent à raison de 11,2 % en poids par rapport au poids total des monomères et de l'hypophosphite ainsi qu'à l'exception de la quantité de soude à 50 % qui est deux fois moindre, on ajoute dans les mêmes conditions opératoires et avec le même matériel que dans l'essai n° 19, d'une part une charge identique en eau oxygénée et d'autre part une charge d'acide acrylique à 100 % correspondant à un rapport pondéral en monomère de 70,6 % d'acide acrylique et 29,4 % d'anhydride maléique.

Le polymérisat ainsi obtenu est une solution limpide et incolore correspondant à un copolymère selon l'invention (70,6 % acide acrylique - 29,4 % anhydride maléique) de viscosité spécifique égale à 0,39 qui, après neutralisation jusqu'à pH = 8,6 à l'aide de soude à 50 %, possède une concentration en matière sèche égale à 45 % et des teneurs en anhydride maléique et acide acrylique résiduels respectivement égales à 120 ppm et 110 ppm mesurées par rapport au produit en l'état et selon la même méthode que celle des essais précédents.

Exemple 5 :

Cet exemple a pour but d'illustrer la possibilité de variation de la viscosité spécifique pour un copolymère de composition monomérique donnée.

Essai n° 28 :

Cet essai correspond à la composition monomérique et au mode opératoire de l'essai n° 25 avec 1,5 fois plus en poids d'hypophosphite de sodium réparti pour un quart en pied de cuve et pour les trois quarts en ajout parallèle et avec quatre fois plus d'eau oxygénée.

Le polymérisat ainsi obtenu est une composition limpide et incolore correspondant à un copolymère selon l'invention (85 % acide acrylique - 15 % anhydride maléique en poids) de viscosité spécifique égale à 0,44 qui, après neutralisation jusqu'à pH = 8,6 à l'aide de soude à 50 %, possède une concentration en matière sèche égale à 47,0 % et des teneurs en anhydride maléique et acide acrylique résiduels de l'ordre de 10 ppm mesurées par rapport au produit en l'état et selon la même méthode que celle des essais précédents.

Essai n° 29 :

Cet essai correspond a la même composition pondérale en monomère que celle de l'essai précédent avec des quantités d'hypophosphite de sodium trois fois moindre et d'eau oxygénée deux fois moindre.

Le polymérisat ainsi obtenu est une solution limpide et incolore correspondant à un copolymère selon l'invention (85 % acide acrylique - 15 % anhydride maléique en poids) de viscosité spécifique égale à 1,26 qui, après neutralisation jusqu'à pH = 8,6 à l'aide de soude à 50 %, a une concentration en matière sèche égales à 43,6 % et des teneurs en anhydride maléique et acide acrylique residuels égale à 140 ppm mesurées par rapport au produit en l'état et selon la même méthode que celle des essais précédents.

Exemple 6 :

Cet exemple permet d'illustrer l'obtention d'autres copolymères selon l'invention.

Essai n° 30 :

Dans cet essai on procède à l'obtention d'un copolymère acide acrylique-acide méthacrylique par la mise en oeuvre du même mode opératoire que dans l'essai n° 19 à savoir l'ajout de deux charges contenant respectivement l'acide acrylique et l'eau oxygénée dans un réacteur contenant l'eau, l'acide méthacrylique, l'hypophosphite de sodium et la soude à 50 % en quantité telle que le polymérisat obtenu après 2 heures d'ajout à reflux est un copolymère selon l'invention (13 % acide méthacrylique-87 % acide acrylique en poids), limpide, incolore, de viscosité spécifique égale 0,84 qui, après neutralisation jusqu'à pH = 8,6 à l'aide de soude à 50 %, possède une concentration en matière sèche de 50,4 % et des teneurs en acide méthacrylique et acide acrylique résiduels inférieures à 10 ppm mesurées par rapport au produit en l'état et selon la même méthode que celle des essais précédents.

Essai n° 31 :

Dans cet essai on procède à l'obtention d'un copolymère acide acrylique-acide méthacrylique par l'ajout de deux charges, contenant l'une 25 grammes d'eau oxygénée à 130 volumes et 75 grammes d'eau et l'autre 300 grammes d'acide acrylique, 300 grammes d'acide méthacrylique ainsi que les 75 % de la quantité totale d'hypophosphite de sodium correspondant à 0,064 atome de phosphore par mole de monomères à polymériser, dans un réacteur contenant, 456 grammes d'eau et le quart restant de la quantité totale d'hypophosphite de sodium.

Après deux heures d'ajout à reflux, le polymérisat obtenu est un copolymère selon l'invention (50 % acide acrylique-50 % acide méthacrylique), limpide, incolore, de viscosité spécifique égale à 1,0 qui, après neutralisation jusqu'à pH = 8,6 à l'aide de soude à 50 %, possède une concentration en matière sèche de 38,6 % et des teneurs en acide acrylique et méthacrylique résiduels respectivement égales à 30 ppm et inférieure à 10 ppm mesurées par rapport au produit en l'état et selon la même méthode que celle des essais précédents.

Essai n° 32 :

Dans cet essai on procède à l'obtention d'un copolymère anhydride maléique-acide méthacrylique par la mise en oeuvre du même mode opératoire que dans l'essai n° 21 en remplaçant l'acide acrylique par l'acide méthacrylique. Le polymérisat obtenu après 2 heures d'ajout à reflux est un copolymère selon l'invention (60 % acide méthacrylique-40 % anhydride maléique en poids), limpide, incolore, de viscosité spécifique égale à 0,32 qui, après neutralisation jusqu'à pH = 8,6 à l'aide de soude à 50 %, possède une concentration en matière sèche de 46,2 % et des teneurs en acide méthacrylique et anhydride maléique respectivement égales à 28 ppm et 200 ppm mesurées par rapport au produit en l'état et selon la même méthode que celle des essais précédents.

Essai n° 33 :

Dans cet essai, on procède à l'obtention d'un copolymère acide acrylique-acrylamide.
Dans ce but, dans un reacteur en verre de deux litres équipé d'une agitation, d'un thermomètre et d'un système de refroidissement, on prépare à température ambiante une charge appelée pied de cuve composée de 200 grammes d'eau et d'un quart de la quantité totale d'hypophosphite de sodium correspondant à 0,059 atome de phosphore par mole de monomères à polymériser.
Pendant la montée en température du pied de cuve, on prépare les deux charges à introduire en parallèle pendant deux heures.
Pour cela, on ajoute dans un premier bécher 181 grammes d'acide acrylique à 100 %, 844 grammes d'acrylamide à 50 % et les trois quarts restant de la quantité totale d'hypophosphite de sodium.
Dans un deuxième bécher, on mélange 25 grammes d'eau oxygénée à 130 volumes et 75 gammes d'eau.
Après deux heures d'ajout à ébullition, on obtient un polymérisat en solution, limpide et incolore.
Le produit ainsi obtenu est un copolymère selon l'invention correspondant à un rapport pondéral en monomère de 30 % d'acide acrylique et 70 % d'acrylamide, de viscosité spécifique égale à 0,37 qui, après neutralisation jusqu'à pH = 8,6 à l'aide de soude à 50 %, possède une concentration en matière sèche égale à 45,3 % et des teneurs en acide acrylique et acrylamide résiduels respectivement égale à 30 ppm et inférieure à 10 ppm mesurées par rapport au produit en l'état et selon la même méthode que celle des essais précédents.

Essai n° 34 :

Dans cet essai, on procède à l'obtention d'un copolymère acide acrylique-méthallyl sulfonate de sodium.
Dans ce but, dans un réacteur en verre de deux litres équipé d'une agitation, d'un thermomètre et d'un système de refroidissement, on prépare à température ambiante une charge appelée pied de cuve composée de 185 grammes d'eau, de la quantité totale d'hypophosphite de sodium correspondant à 0,045 atome de phosphore par mole de monomères à polymériser et 145 grammes de méthallyl sulfonate de sodium à 100 % (MTAS).
Pendant la montée en température du pied de cuve, on prépare les deux charges à introduire en parallèle pendant deux heures.
Pour cela, on ajoute dans un premier bécher 512 grammes d'acide acrylique à 100%.
Dans un deuxième bêcher, on mélange 20 grammes d'eau oxygénée à 130 volumes et 180 grammes d'eau.
Après deux heures d'ajout à ébullition, on obtient un polymérisat en solution, limpide et incolore.
Le produit ainsi obtenu est un copolymère selon l'invention correspondant à un rapport pondéral en monomère de 78 % d'acide acrylique et 12 % de MTAS, de viscosité spécifique égale à 1,19 qui, après neutralisation jusquà'à pH = 8,6 à l'aide de soude à 50 %, possède une concentration en matière sèche égale à 51,5 % et des teneurs en acide acrylique et MTAS résiduels inférieures à 10 ppm mesurées par rapport au produit en l'état et selon la même méthode que celle des essais précédents.

Essai n° 35 :

Dans cet essai, on procède à l'obtention d'un copolymère acide acrylique-acrylate d'éthyle à l'aide du même matériel et du même mode opératoire que ceux de l'essai n° 33 à l'exception du fait que les 844 grammes d'acrylamide à 50 % sont remplacés par 61 grammes d'acrylate d'éthyle et les 181 grammes d'acide acrylique à 100 % par 549 grammes d'acide acrylique à 100%.
Le produit alors obtenu est un copolymère selon l'invention correspondant à un rapport pondéral en monomère de 90 % d'acide acrylique et 10 % d'acrylate d'éthyle, de viscosité spécifique égale à 0,59 qui après neutralisation jusqu'à pH = 8,6 à l'aide de soude à 50 %, possède une concentration en matière sèche égale à 46,7 % et des teneurs en acide acrylique et acrylate d'éthyle résiduels inférieures à 10 ppm mesurées par rapport au produit en l'état et selon la même méthode que celle des essais précédents.

Essai n° 36 :

Dans cet essai, on procède à l'obtention d'un copolymère acide acrylique-acrylate d'éthyle à l'aide du même matériel et du même mode opératoire que ceux de l'essai n° 35 à la seule différence des rapports pondéraux des monomères qui sont pour le présent essai 70 % d'acide acrylique et 30 % d'acrylate d'éthyle.
Le produit alors obtenu est un copolymère selon l'invention correspondant à un rapport pondéral en monomère de 70 % d'acide acrylique et 30 % d'acrylate d'éthyle, de viscosité spécifique égale à 0,61 qui, après neutralisation jusqu'à pH = 8,6 à l'aide de soude à 50 %, possède une concentration en matière sèche égale à 50,6 % et des teneurs en acide acrylique et acrylate d'éthyle respectivement égales à 10 ppm et 15 ppm mesurées par rapport au produit en l'état et selon la même méthode que celle des essais précédents.

Essai n° 37 :

Dans cet essai, on procède à l'obtention d'un copolymère acide acrylique-acrylate de butyle à l'aide du même matériel et du même mode opératoire que ceux de l' essai n° 35 en remplaçant poids pour poids, l'acrylate d'éthyle par l'acrylate de butyle.
Le produit alors obtenu est un copolymère selon l'invention correspondant à un rapport pondéral en monomère de 90 % d'acide acrylique et 10 % d'acrylate de butyle, de viscosité spécifique égale à 0,59 qui, après neutralisation jusqu'à pH = 8,6 à l'aide de soude à 50 %, possède une concentration en matière sèche égale à 48,29 % et des teneurs en acide acrylique et acrylate de butyle résiduels inférieures à 10 ppm mesurées par rapport au produit en l'état et selon la même méthode que celle des essais précédents.

Essai n° 38 :

Dans cet essai, on procède à l'obtention d'un copolymère acide acrylique-méthacrylate de méthyle à l'aide du même matériel et du même mode opératoire que ceux de l'essai précédent en remplaçant poids par poids, l'acrylate de butyle par le méthacrylate de méthyle.
Le produit alors obtenu est un copolymère selon l'invention correspondant à un rapport pondéral en monomère de 90 % d'acide acrylique et 10 % de méthacrylate de méthyle, de viscosité spécifique égale à 0,64 qui, après neutralisation jusqu'à pH = 8,6 à l'aide de soude à 50 %, possède une concentration en matière sèche égale à 46,2 % et des teneurs en acide acrylique et méthacrylate de méthyle inférieures à 10 ppm mesurées par rapport au produit en l'état et selon la même méthode que celle des essais précédents.

Essai n° 39 :

Dans cet essai, on procède à l'obtention d'un terpolymère acide acrylique-acrylamide-phosphate de méthacrylate d'éthylène glycol.
Dans ce but, dans un réacteur en verre de deux litres équipé d'une agitation, d'un thermomètre et d'un système de refroidissement, on prépare à température ambiante une charge appelée pied de cuve composée de 370 grammes d'eau et d'un quart de la quantité totale d'hypophosphite de sodium correspondant à 0,066 atome de phosphore par mole de monomères à polymériser.
Pendant la montée en température du pied de cuve, on prépare les deux charges à introduire en parallèle pendant deux heures.
Pour cela, on ajoute dans un premier bécher 305 grammes d'acide acrylique à 100 %, 99,6 grammes de phosphate de méthacrylate d'éthylène glycol hydrolysé, 260,6 grammes d'acrylamide à 50 %, 100 grammes d'eau et les trois quarts restant de la quantité totale d'hypophosphite de sodium.
Dans un deuxième bécher, on mélange 44 grammes d'eau oxygénée à 130 volumes et 66 grammes d'eau.
Après deux heures d'ajout à ébullition, on obtient un polymérisat en solution, limpide et incolore.
Le produit ainsi obtenu est un copolymère selon l'invention correspondant à un rapport pondéral en monomère de 57 % d'acide acrylique, 19 % d'acrylamide et 24 % de phosphate de méthacrylate d'éthylène glycol, de viscosité spécifique égale à 0,48 qui, après neutralisation jusqu'à pH = 8,6 à l'aide de soude à 50 %, possède une concentration en matière sèche égale à 41,9 % et des teneurs en monomères résiduels inférieures à 10 ppm, mesurées par rapport au produit en l'état et selon la même méthode que celle des essais précédents.

Essai n° 40 :

Dans cet essai, on procède à l'obtention d'un terpolymère acide acrylique-acrylamide-phosphate de méthacrylate d'éthylène glycol à l'aide du même matériel et du même mode opératoire que ceux de l'essai n° 39 mais avec une quantité moindre d'hypophosphite de sodium que celle de l'exemple précédent

Cette quantité correspond à 0,025 atome de phosphore par mole de monomères à polymériser.

Le produit alors obtenu est un copolymère selon l'invention correspondant à un rapport pondéral en monomère de 57 % d'acide acrylique, 19 % d'acrylamide et 24 % de phosphate de méthacrylate d'éthylène glycol, de viscosité spécifique égale à 1,0 qui, après neutralisation jusqu'à pH = 8,6 à l'aide de soude à 50 %, possède une concentration en matière sèche égale à 43 % et des teneurs en monomères résiduels inférieures à 10 ppm, mesurées par rapport au produit en l'état et selon la même méthode que cette des essais précédents.

Exemple 7 :

Cet exemple a pour but d'illustrer l'utilisation des polymères selon l'invention comme agent de dispersion de matières minérales en milieu aqueux et plus particulièrement comme agent de dispersion du kaolin dans l'eau.

A cet effet pour chacun des différents essais suivants on introduit en pluie sous agitation 500 grammes de kaolin dans un bécher d'un litre contenant 258 grammes d'eau, 1,10 grammes sec de l'agent dispersant à tester et la quantité de soude à 50 % nécessaire pour obtenir un pH de l'ordre de 7,2 - 7,5.

Les différents agents dispersants testés sont:

Essai n° 41 :

Cet essai constitue l'essai témoin dans lequel aucun agent dispersant n'est présent dans le bécher.

Essais n° 42 à 46 :

Ces essais illustrent l'invention et mettent respectivement en oeuvre les copolymères selon l'invention des essais n°21, 23, 24 et 25 et l'homopolymère selon l'invention de l'essai n° 9 neutralisés à pH = 8,6 avec de la soude à 50 %. Après 45 minutes d'agitation, on mesure, à température ambiante, les viscosités Brookfield à l'aide d'un viscosimètre Brookfield type RVT à 100 T/min.

Les résultats des mesures de viscosité Brookfield des suspensions aqueuses de kaolin figurent dans le tableau 1 suivant :

## TABLEAU 1

| ESSAI n° | | DISPERSANT UTILISÉ | | EXTRAIT SEC DU SLURRY (%) | VISCOSITES BROOKFIELD (mPa.s) 100 T/min |
|---|---|---|---|---|---|
| | | Type | Quantité (% en poids sec/sec) | | |
| 41 | TEMOIN | - | 0 | | > 100 000 |
| 42 | INVENTION | Copolymère de l'essai n° 21 | 0,22 | 66,0 | 500 |
| 43 | INVENTION | Copolymère de l'essai n° 23 | 0,22 | 66,4 | 650 |
| 44 | INVENTION | Copolymère de l'essai n° 24 | 0,22 | 66,2 | 745 |
| 45 | INVENTION | Copolymère de l'essai n° 25 | 0,22 | 66,0 | 1220 |
| 46 | INVENTION | Homopolymère de l'essai n° 9 | 0,22 | 66,0 | 410 |

La lecture du tableau 1 met en évidence que les copolymères obtenus selon le procédé de l'invention peuvent aboutir des dispersions aqueuses de kaolin utilisables industriellement et donc peuvent être utilisées comme agent de dispersion de matériaux minéraux.

Exemple 8 :

Cet exemple a pour but d'illustrer l'utilisation des polymères selon l'invention obtenus par le procédé de l'invention comme agent de dispersion de matériaux minéraux en milieu aqueux utilisés dans l'industrie du papier et plus particulièrement comme agent dispersant du carbonate de calcium dans l'eau.

A cet effet pour les essais n° 47 à 50 on disperse, avec le même mode opératoire que celui de l'exemple précédent du carbonate de calcium naturel de granulométrie telle que 75 % des particules ont un diamètre inférieur à 1 micromètre à une concentration en matière sèche de 72 % et une quantité de dispersant égale à 0,75 % en sec par rapport au poids sec de carbonate de calcium.

Les différents agents dispersants sont :

Essai n° 47 :

Cet essai constitue l'essai témoin dans lequel aucun agent dispersant n'est présent dans le bécher.

Essais n° 48 à 50 :

Ces essais illustrent l'invention et mettent respectivement en oeuvre les copolymères selon l'invention des essais n° 26. 25 et 24 neutralisés à pH = 8,6 avec de la soude à 50 %.

Après 45 minutes d'agitation, on mesure, à température ambiante, les viscosités Brookfield à l'aide d'un viscosimètre Brookfield type RVT à 10 T/min et 100 T/min.

Les résultats des mesures de viscosité Brookfield des suspensions aqueuses de carbonate de calcium naturel figurent dans le tableau 2 suivant :

## TABLEAU 2

| ESSAI n° | DISPERSANT UTILISÉ | | EXTRAIT SEC DU SLURRY (%) | VISCOSITES BROOKFIELD (mPa.s) | | |
|---|---|---|---|---|---|---|
| | Type | Quantité (% en poids sec/sec) | | 10 T/mn | 100 T/mn | |
| 47 | - | 0 | 72 | > 100 000 | > 100 000 | TEMOIN |
| 48 | Copolymère de l'essai n° 26 | 0,75 | 72 | 650 | 310 | INVENTION |
| 49 | Copolymère de l'essai n° 25 | 0,75 | 72 | 5500 | 955 | INVENTION |
| 50 | Copolymère de l'essai n° 24 | 0,75 | 72 | 19000 | 2100 | INVENTION |

De même dans les essais n° 51 à 56, on disperse, avec le même mode opératoire que celui de l'exemple précédent, du carbonate de calcium précipité commercialisé par la société Solvay sous le nom de Socal P3 à une concentration en matière sèche de 70 % et une quantité de dispersant égale à 0,7 % en sec par rapport au poids sec de carbonate de calcium.

Les différents agents dispersants testés sont :

Essai n° 51 :

Cet essai constitue l'essai témoin dans lequel aucun agent dispersant n'est présent dans le bécher.

Essais n° 52 à 56 :

Ces essais illustrent l'invention et mettent respectivement en oeuvre les copolymères selon l'invention des essais n° 23 à 26 et l'homopolymère selon l'invention de l'essai n° 9 neutralisés à pH = 8,6 avec de la soude à 50 %.
Après 45 minutes d'agitation, on mesure, à température ambiante, les viscosités Brookfield à l'aide d'un viscosimètre Brookfield type RVT à 100 T/min.
Les résultats des mesures de viscosité Brookfield des suspensions aqueuses de Socal P3 figurent dans le tableau 3 suivant :

## TABLEAU 3

| ESSAI n° | | DISPERSANT UTILISÉ | | EXTRAIT SEC DU SLURRY (%) | VISCOSITES BROOKFIELD (mPa.s) 100 T/mn |
|---|---|---|---|---|---|
| | | Type | Quantité (% en poids sec/sec) | | |
| 51 | TEMOIN | - | 0 | 70 | > 100 000 |
| 52 | INVENTION | Copolymère de l'essai n° 23 | 0,7 | 70 | 920 |
| 53 | INVENTION | Copolymère de l'essai n° 24 | 0,7 | 70 | 870 |
| 54 | INVENTION | Copolymère de l'essai n° 25 | 0,7 | 70 | 720 |
| 55 | INVENTION | Copolymère de l'essai n° 26 | 0,7 | 70 | 580 |
| 56 | INVENTION | Homopolymère de l'essai n° 9 | 0,7 | 70 | 760 |

La lecture des tableaux 2 et 3 met en évidence l'efficacité des copolymères de l'invention obtenu selon le procédé de l'invention comme agent dispersant de matériaux minéraux.

Exemple 9 :

Cet exemple concerne la préparation d'une suspension de carbonate de calcium grossier soumise à un broyage pour l'affiner en une suspension microparticulaire. Dans ce but, une suspension de carbonate de calcium grossier a été préparée à partir d'un carbonate de calcium naturel, en mettant en oeuvre :

- pour l'essai n° 57 illustrant l'essai témoin, une simple mise en suspension du cabonate de calcium dans l'eau à 25 % sans ajout d'agent dispersant.

- pour l'essai n° 58 illustrant l'invention, le polyacrylate de l'essai n° 5 totalement neutralisé par de la soude et de l'hydroxyde de magnésium dans un rapport correspondant à une neutralisation 50 % sodium - 50 % magnésium.

- pour l'essai n° 59 illustrant l'invention, l'acide polyacrylique de l'essai n° 9 totalement neutralisé par de la soude et de l'hydroxyde de magnésium dans un rapport correspondant à une neutralisation 50 % sodium - 50 % magnésium.

- pour l'essai n° 60 illustrant l'invention, le polyacrylate de l'essai n° 5 totalement neutralisé par de la soude et de la chaux dans un rapport correspondant à une neutralisation 70 % sodium - 30 % culcium.

- pour l'essai n° 61 illustrant l'invention, le polyacrylate de l'essai n° 9 totalement neutralisé par de la soude et de la chaux dans un rapport correspondant à une neutralisation 70 % sodium - 30 % calcium.

Pour chaque essai, on a préparé une suspension aqueuse de carbonate de calcium provenant du gisement d'Orgon (France), ayant une granulométrie inférieure à 10 microns.

La suspension aqueuse a une concentration en matière sèche de 76 % en poids par rapport à la masse totale à l'exception de l'essai témoin pour lequel la suspension a une concentration en matière sèche de 25 % en poids par rapport à la masse totale.

L'agent de broyage est introduit dans cette suspension selon les quantités indiquées dans le tableau ci-après, exprimées en pour cent en poids sec par rapport à la masse de carbonate de calcium sec à broyer.

La suspension circule dans un broyeur du type Dyno-Mill à cylindre fixe et impulseur tournant, dont le corps broyant est constitué par des billes de corindon de diamètre compris dans l'intervalle 0,6 millimètre à 1,0 millimètre.

Le volume total occupé par le corps broyant est de 1 150 centimètres cubes tandis que sa masse est de 2 900 g.

La chambre de broyage a un volume de 1 400 centimètres cubes.

La vitesse circonférentielle du broyeur est de 10 mètres par seconde.

La suspension de carbonate de calcium est recyclée à raison de 18 litres par heure.

La sortie du broyeur Dyno-Mill est munie d'un séparateur de mailles 200 microns permettant de séparer la suspension résultant du broyage et le corps broyant.

La température lors de chaque essai de broyage est maintenue à 60°C environ.

A la fin du broyage (To), on récupère dans un flacon un échantillon de la suspension pigmentaire dont 80 % des particules ont une dimension inférieure à un micromètre, et on en mesure la viscosité à l'aide d'un viscosimètre Brookfield type RVT, à une température de 20°C et des vitesses de rotation de 10 tours par minute et 100 tours par minute avec le mobile adéquat.

Après un temps de repos de 8 jours dans le flacon, la viscosité de la suspension est mesurée par introduction dans le flacon non agité du mobile adéquat du viscosimètre Brookfield type RVT, à une température de 20°C et des vitesses de rotation de 10 tours par minute et 100 tours par minute (viscosité AVAG = avant agitation).

Les mêmes mesures de viscosité sont également effectuées une fois le flacon agité et constituent les résultats de viscosité APAG (après agitation).

Tous ces résultats expérimentaux sont consignés dans le tableau 4 suivant :

TABLEAU 4

| ESSAIS n° | | CONCENTRATION DE LA SUSPENSION EN MATIÈRE SÈCHE | AGENT DE BROYAGE | | VISCOSITÉ BROOKFIELD DE LA SUSPENSION (à 20° C en mPa.s) | | |
|---|---|---|---|---|---|---|---|
| | | | Viscosité spécifique | Consommation en agent en % sec/sec | To 10 T/min - 100 T/min | 8 jours AVAG 10 T/min - 100 T/min 100 T/min - 100 T/min | 8 jours APAG 10 T/min - 100 T/min 100 T/min - 100 T/min |
| 57 | Témoin | 25 | - | - | 800 - 450 | 20 000 - 2500 | 1200 - 650 |
| 58 | Invention | 76 | 0,53 | 0,98 | 1080 - 330 | 2060 - 620 | 820 - 280 |
| 59 | Invention | 76 | 0,53 | 1,10 | 950 - 290 | 1400 - 450 | 900 - 275 |
| 60 | Invention | 76 | 0,53 | 0,95 | 1030 - 330 | 7600 - 1300 | 930 - 320 |
| 61 | Invention | 76 | 0,53 | 0,99 | 1930 - 570 | 10000 - 1660 | 1400 - 450 |

AVAG : Mesure de la viscosité avant agitation de la suspension

APAG : Mesure de la viscosité après agitation de la suspension

La lecture du tableau 4 met en évidence l'efficacité des polymères de l'invention obtenue par le procédé selon l'invention comme agent de broyage de suspension aqueuse de matériaux minéraux à forte concentration en matière sèche.

Exemple 10 :

Cet exemple concerne l'utilisation de divers polymères selon l'invention dans une peinture aqueuse mate intérieure pour évaluer leur efficacité dispersante et leur capacité d'accroître la résistance à l'eau des films secs c'est-à-dire évaluer la stabilité rhéologique et la résistance à l'eau des diverses peintures mates intérieures obtenues.

Pour tous les essais, à l'exception de l'essai témoin, nous rajoutons sous agitation 0,06 % en poids sec du dispersant testé, par rapport au poids total d'une même formulation peinture aqueuse mate, dans un récipient contenant déjà 160 g d'eau et 1 g d'ammoniaque à 28 %.

Après quelques secondes d'agitation suivant l'introduction du copolymère dispersant dans l'eau ammoniaquée, on introduit successivement les autres constituants de la dite peinture aqueuse mate qui sont :

| | |
|---|---|
| 2 g | d'un biocide commercialisé par la société RIEDEL DE HAEN sous le nom de MERGAL K6N |
| 1 g | d'un antimousse commercialisé par la société BYK saus le nom de BYK 034 |
| 41 g | d'oxyde de titane rutile commercialisé par la société THANN et MULHOUSE sous le nom RL 68 |
| 327,9 g | de carbonate de calcium naturel commercialisé par la société OMYA sous le nom DURCAL 2 |
| 215,2 g | de carbonate de calcium naturel commercialisé par la société OMYA sous le nom HYDROCARB |
| 82 g | d'un liant styrène-acrylique en dispersion commercialisé par la société RHONE-POULENC sous le nom de RHODOPAS DS 910 |
| 10,2 g | de monoéthylène glycol |
| 10,2 g | de White Spirit |
| 1,3 g | d'ammoniaque à 28 % |
| 13,6 g | d'un épaississant commercialisé par COATEX sous le nom VISCOATEX 46 |
| qsp 1000 g | en eau. |

Les divers dispersants testés sont :

Essai 62 :

Cet essai est l'essai témoin dans lequel aucun agent dispersant n'est rajouté.

Essais n° 63 à 66 :

Ces essais illustrent l'invention et mettent respectivement en oeuvre les copolymères des essais n° 19, 21, 22 et 25.

Pour chacun de ces essais, après quelques minutes d'agitation de la composition aqueuse ainsi réalisée, on mesure les viscosités Brookfield des différentes compositions à 25°C, à 10 tours par minute à l'aide d'un viscosimètre Brookfield type RVT équipé du mobile adéquat.

La stabilité rhéologique dans le temps et en température des formulations est déterminée par la mesure des viscosités Brookfield à 10 tours par minute et à 25°C de ces formulations après un stockage sans agitation de 24 heures à température ambiante, puis après un stockage d'une semaine dans une étuve à 50°C et enfin après un stockage d'un mois dans la même étuve à 50°C.

Au cours de la préparation des compositions des précédents essais, on procède également à une évaluation visuelle de la dimension du vortex présent autour de l'axe d'agitation tout au long de l'ajout des charges et/ou des pigments minéraux ainsi que des divers additifs pour estimer la facilité à l'empâtage de la composition, facilité à l'empâtage qui est un élément constitutif de l'efficcacité dispersante.

Ainsi dans le tableau 5 regroupant tous les résultats obtenus pour les différents essais, il sera noté dans la colonne intitulée facilité à l'empâtage :

- TB lorsque le vortex aura conservé une dimension et une forme constantes tout au long de l'incorporation des charges et/ou pigments minéraux traduisant ainsi une très bonne fluidité de la composition obtenue

- B lorsque la dimension du vortex aura légèrement diminué au cours de l'incorporation des charges et/ou pigments minéraux

- AB lorsque le vortex devient tout petit au cours de l'incorporation des charges et/ou pigments minéraux mais permet tout de même une homogénéisation des divers composants de la formulation.

La notation M figurant pour l'essai témoin signifie que le vortex autour de l'axe d'agitation a complètement disparu provoquant ainsi une mauvaise homogénéisation du milieu.

Le comportement rhéologique des diverses peintures mates intérieures ayant été ainsi mesuré, on procède pour tous les essais aux tests de résistance à l'abrasion humide sur film sec selon la norme DIN 53778, partie n° 2.

Ce test consiste à déterminer à l'aide de l'abrasimètre GARDNER modèle M 105-A (homologué DIN 53778), le nombre d'allers-retours que fait une brosse calibrée selon la norme DIN 53778, en frottant sur un film de peinture préalablement séché sur une carte LENETA et d'une épaisseur de 100 micromètres en présence d'une solution détergente pour abraser complètement ce film de peinture.

Tous ces résultats sont rassemblés dans le tableau 5 suivant :

## TABLEAU 5

| | ESSAI n° | DISPERSANT SEC % poids | VISCOSITES BROOKFIELD DE LA PEINTURE | | | | FACILITE A L'EMPATAGE | RESISTANCE A L'ABRASION HUMIDE nombre d'aller-retours (DIN 53778) |
|---|---|---|---|---|---|---|---|---|
| | | | T = 0 10 T/mn (mPa.s) | T = 24 heures 10 T/mn (mPa.s) | T = 1 Semaine 50°C 10 T/mn (mPa.s) | T = 1 Mois 50°C 10 T/mn (mPa.s) | | |
| TEMOIN | 62 | 0 | 21000 | 34000 | 62000 | 68000 | M | 500 |
| INVENTION | 63 | 0,06 | 17500 | 15500 | 47000 | 58000 | AB | 660 |
| | 64 | 0,06 | 16500 | 11000 | 34000 | 44000 | B | 750 |
| | 65 | 0,06 | 17000 | 14000 | 32000 | 38000 | TB | 750 |
| | 66 | 0,06 | 16800 | 14500 | 22000 | 36000 | TB | 750 |

La lecture du tableau 5 permet de constater que seules les peintures aqueuses mates intérieures contenant les polymères selon l'invention présentent à la fois une bonne stabilité rhéologique c'est-à-dire des viscosités Brookfield à 10 Tours par minute à 25°C inférieures à 60 000 mPa.s après un mois de stockage à 50°C, une facilité à l'empâtage au moins assez bonne (AB) et une résistance à l'abrasion humide accrue par rapport au témoin sans agent dispersant.

Exemple 11 :

Cet exemple a pour but d'illustrer l'utilisation des polymères selon l'invention dans le traitement des eaux comme agent anti-tartre, par mesure du retard de la précipitation des ions alcalino-terreux et plus particulièrement du carbonate de calcium contenus dans les eaux naturelles ou artificielles salines ou non en présence des dits polymères.

Pour ce faire et pour chacun des essais on introduit, dans un ballon d'un litre muni d'un réfrigérant, de l'eau de ville contenant 5 ppm de chacun des polymères à tester, à l'exception de l'essai n° 67 qui constitue l'essai témoin et pour lequel l'eau de ville ne contient aucun polymère.

Les essais n° 68 et 69 illustrant l'invention correspondent à la mise en oeuvre respective des copolymères des essais n° 23 et 22.

Cette eau est chauffée à ébullition et à reflux. A t= 0, c'est à dire lorsque la première couronne de bulles apparaît (début de l'ébullition) on effectue une prise d'essai de 20 ml. Cette eau est immédiatement filtrée sur un filtre Millipore à 0,45 micron puis transférée dans un bécher de 100 ml pour être dosée par l'EDTA. Dans ce but, on introduit dans le bécher un comprimé tampon indicateur MERCK référence 108430, 3 ml de tampon ammoniacal que l'on agite à l'aide d'un barreau magnétique, puis l'eau filtrée. Après quelques secondes d'agitation, l'EDTA 5.10-3 M est coulé à l'aide d'une burette jusqu'à coloration vert franc. Le calcul du TH (titre hydrotimétrique) obtenu est Volume EDTA coulé x 2,5 = TH en ° français (1 degré français = 10 mg exprimé en $CaCO_3$ par litre d'eau), la valeur obtenue est alors notée TH 0. De même des prises d'échantillons sont effectuées après 15 et 30 minutes d'ébullition. Les valeurs TH obtenues sont alors notées TH 15 et TH 30 et référencées dans le tableau 6 suivant :

## TABLEAU 6

| ESSAI n° | AGENT ANTI-TARTRE | TH 0 | TH 15 | TH 30 | |
|---|---|---|---|---|---|
| 67 | - | 29,4 | 7,9 | 6,6 | TEMOIN |
| 68 | Copolymère essai n° 23 | 29,4 | 19,85 | 14,8 | INVENTION |
| 69 | Copolymère essai n° 22 | 29,4 | 23,4 | 19,3 | INVENTION |

La lecture du tableau n° 6 met en évidence l'efficacité des polymères de l'invention obtenue par le procédé selon l'invention comme agent anti-tarte.

Example 12 :

Cet exemple concerne des formulations alcalines chlorées utilisées, entre autre, comme agent de blanchiment et désinfectant en détergence mais pourrait également concerner d'autres formulations de blanchiment communément rencontrées en détergence.

Il a plus particulièrement pour but d'illustrer que l'utilisation des polymères selon l'invention comme agent anti-tartre et dispersant dans ces formulations ne nuit pas à la stabilité d'une composition alcaline chlorée en évitant une chute de degré chlorométrique qui impliquerait une perte d'efficacité de la solution d'hypochlorite contenue dans la composition détergente.

Ainsi pour chaque essai on ajoute sous agitation, et dans un bécher de 200 ml contenant 50,65 grammes d'eau, 29,35 grammes d'eau de javel à 36,96 degré chlorométrique et 15 grammes de soude à 50 %.

Une fois ce mélange homogénéisé, on rajoute 5 grammes de polymère à tester en l'état à l'exception de l'essai n° 70 témoin pour lequel aucun polymère n'est ajouté.

Après avoir attendu le refroidissement du mélange, on procède à la dilution de 10 ml dudit mélange dans 100 ml d'eau.

Cette dilution faite, on procède au dosage des hypochlorites présents dans 20 ml de la composition alcaline chlorée diluée.

Ce dosage des hypochlorites est effectué par la méthode de Bunsen basée sur le principe de l'oxydation des ions iodures par les ions hypochlorites. L'iode alors libéré est titré par une solution de thiosulfate de sodium 0,1 N qui nous permet d'accéder par calcul au degré chlorométrique de la composition alcaline chlorée.

Ainsi pour la prise d'essai de 20 ml le degré chlorométrique (°Cl) est :

$$°Cl = \frac{\text{Volume thiosulfate de sodium}}{20} \times 11,2$$

La valeur obtenue pour l'essai témoin n° 68 sert alors de valeur de référence et constitue les 100 % d'hypochlorite présent dans la formulation.

Les différents essais effectués sont :

Essai n° 70 :

Essai témoin, aucun polymère.

Essai n° 71 :

Essai illustrant l'art antérieur et mettant en oeuvre un polyacrylate de sodium obtenu selon un quelconque procédé de l'art antérieur et de viscosité spécifique égale à 0,56.

Essai n° 72 :

Essai illustrant l'invention et mettant en oeuvre l'acide polyacrylique de l'essai n° 9 totalement neutralisé par de la soude.

Pour chacun de ces essais, on procède à une détermination du degré chlorométrique par la même méthode de dosage après 24 heures et 8 jours.

Les résultats en pourcentage d'hypochlorite restant par rapport au témoin figurent dans le tableau 7 suivant:

TABLEAU 7

|  | ESSAI n° | POLYMERE | T0 (%) | 24 heures (%) | 8 jours (%) |
|---|---|---|---|---|---|
| TEMOIN | 70 | - | 100 | 100 | 100 |
| ART ANTERIEUR | 71 | Polyacrylate de sodium de $\mu$ spécifique = 0,56 | 100 | 98,4 | 90,6 |
| INVENTION | 72 | Polyacrylate de l'essai n° 9 | 100 | 100 | 94,9 |

La lecture du tableau 7 ci-dessus permet de mettre en évidence l'évolution du degré chlorométrique de chacune des solutions et d'illustrer que les polymères selon l'invention, obtenus par le procédé de l'invention, permettent de ne pas déstabiliser le degré chlorométrique de la composition alcaline chlorée.

Exemple 13 :

Cet exemple concerne l'utilisation de polymère selon l'invention comme agent fluidifiant d'un fluide de forage dont la phase aqueuse est de l'eau douce.

Pour ce faire, on prépare une boue de forage selon le protocole suivant :

On place 500 cm$^3$ d'eau douce dans un bécher de 5 litres.

Puis on ajoute, sous agitation, (turbine Rayneri de diamètre 50 millimètres tournant à 2 000 tours par minute) 3 g de $Na_2CO_3$ technique en une seule fois pour provoquer la précipitation des ions $Ca^{2+}$ et $Mg^{2+}$.

On introduit ensuite dans ce milieu 75 g d'une bentonite A (rendement de 20 à 25 m$^3$.T$^{-1}$ mesuré selon la norme OCMA-DFCP4-1973) tout en maintenant l'agitation pendant 15 minutes.

Puis on ajoute 112,5 g d'une attapulgite B (rendement 30 à 35 m$^3$T$^{-1}$ mesuré selon la norme OCMA-DFCP1-1973) tout en maintenant l'agitation pendant 15 minutes.

Dans ce milieu, on introduit 37,5 g de carboxyméthylcellulose (C.M C. Technique, basse viscosité répondant à la norme OCMA-DFCP2-1980) tout en maintenant l'agitation pendant 15 minutes.

Puis on ajoute 225 g d'une argile de charge C de faible gonflement (rendement 15 m$^3$.T$^{-1}$ environ) tout en maintenant l'agitation pendant 20 minutes.

A l'issue de cette préparation, on contrôle et corrige le pH du milieu avec une solution d'hydroxyde de sodium de telle sorte qu'il soit compris entre 9,5 et 10.

La boue ainsi préparée est soumise à une action de cisaillement au moyen d'un agitateur Sylverson Type L. R2, muni d'une grille à haut cisaillement d'un diamètre de 35 millimètres.

Après une période de repos de 24 heures, la boue est à nouveau agitée au moyen de la turbine Rayneri précitée pendant environ 5 minutes.

Dès lors, on effectue deux prélèvements de 500 cm$^3$, en vue de tester l'efficacité du fluidifiant selon l'invention.

L'essai n° 73 constitue l'essai témoin et la même boue adjuvantée au moyen de 7,5 g d'un polyacrylate de sodium de viscosité spécifique égale à 0,4 et constituant le fluidifiant réputé le meilleur de l'art antérieur.

L'essai n° 74 constitue l'essai témoin selon l'invention et concerne la même boue adjuvantée au moyen de 7,5 g de matière active du polyacrylate de sodium selon l'invention obtenu dans l'essai n° 3 de viscosité spécifique égale à 0,41.

Ces deux essais sont soumis à une agitation pendant 10 minutes au moyen d'un Hamilton-Beach (position Low) tout en maintenant le pH dans l'intervalle 9,5-10.

A l'issue de cette période d'agitation, on contrôle les caractéristiques rhéologiques à 20°C au moyen d'un viscosimètre FANN 35, et on mesure le filtrat API sous 100 psi et pendant 30 minutes selon la méthode bien connue de l'homme de l'art.

Les caractéristiques rhéologiques contrôlées sont la viscosité apparente (Va), la viscosité plastique (Vp), la Yield Value (Yv), le gel 0 et le gel à 10 telles qu'elles sont définies dans l'ouvrage "manuel de rhéologie des fluides de forage et laitiers de ciment"- édition Technip - 1979.

Toutes les caractéristiques ont été consignées dans le tableau 8 ci-après.

## TABLEAU 8

| | Art antérieur | Invention |
|---|---|---|
| Essais n° | 73 | 74 |
| pH | 9,51 | 9,50 |
| LECT 600 T | 87 | 88 |
| LECT 300 T | 64 | 65 |
| Va | 43,5 | 44 |
| Vp | 23 | 23 |
| Yv | 41 | 42 |
| Gel 0 | 40 | 42 |
| Gel 10 | 250 | 255 |

La lecture du tableau 8 révèle que la boue contenant le polyacrylate selon l'invention a un comportement rhéologique équivalent à celui de la boue additivée par un polyacrylate selon l'art antérieur.

Exemple 14 :

Cet exemple concerne l'utilisation de polymère selon l'invention dans le domaine de la céramique.

Pour ce faire, on prépare une dispersion de barbotine par la mise en oeuvre pour l'essai n° 75 d'un polyacrylate de sodium de viscosité spécifique égale à 0,4 selon l'art antérieur et pour l'essai n° 76 du polyacrylate de sodium de l'essai n° 3 selon l'invention.

Pour chacun des essais, on ajoute sous agitation dans 1088,8 grammes d'eau, 1,645 grammes sec de polymère à tester, 3,422 grammes de silicate de sodium, 1,324 grammes de carbonate de sodium.

Après homogénéisation du mélange on poursuit par l'addition de 2 800 grammes d'argile composée essentiellement d'argiles, de feldspaths, et de sables.

Après une heure d'agitation on mesure les viscosités Brookfield à l'aide d'un viscosimètre Brookfield type RVT à 1 Tour/minute, 10 Tours/minute, 100 Tours/minute.

Les résultats obtenus figurent dans le tableau 9 suivant :

## TABLEAU 9

| | | Art antérieur | Invention |
|---|---|---|---|
| | Essai n° | 75 | 76 |
| Viscosité | 1 T/mn | 4400 | 4350 |
| en | 10 T/mn | 1700 | 1600 |
| mPa.s | 100 T/mn | 1600 | 1500 |

La lecture du tableau 9 révèle que la dispersion de barbotine contenant le polyacrylate selon l'invention a un comportement rhéologique équivalent à celui d'une barbotine contenant le polyacrylate selon l'art antérieur.

Exemple 15 :

Cet exemple concerne l'utilisation de polymère selon l'invention comme agent de rétention d'eau dans l'industrie papetière.

Pour ce faire, on prépare une sauce de couchage à 68 % d'extrait sec contenant 0,3 % en poids sec d'agent de rétention d'eau à tester par rapport au poids de carbonate de calcium sec.

Pour l'essai n° 77, l'agent de rétention d'eau est un polyacrylate de sodium de l'art antérieur de viscosité spécifique égale à 5,0 et pour l'essai n° 78 selon l'invention, l'agent de rétention d'eau est un polyacrylate de sodium selon l'invention de l'essai n° 13 et de viscosité spécifique égale à 4,8.

Ainsi pour chacun des essais, on prépare une sauce de couchage par ajout dans un bécher de 1000 ml, d'une quantité d'eau nécessaire pour aboutir à une concentration finale de la sauce de couchage égale à 68 %, et d'une suspension de carbonate de calcium (de taille particulaire telle que 90 % de ces particules ont une dimension inférieure à 2 micromètres) correspondant à un poids de 500 grammes de carbonate de calcium sec.

Cette suspension étant réalisée, on introduit l'agent de rétention d'eau sous agitation.

Après 15 minutes d'agitation, on ajoute une quantité correspondant à 10,5 % en poids sec de latex (Acronal S 360D de BASF) par rapport au poids sec de carbonate de calcium. Après 15 minutes d'agitation, on procède aux mesures des viscosités Brookfield à 10 T/minute et 100 T/minute à température ambiante et à l'aide d'un viscosimètre Brookfield type RVT équipé du mobile 3.

Pour le test de rétention d'eau, la sauce de couchage est soumise à une pression de 100 psi (7 bars) dans un filtre presse API équipé d'une surface perméable.

Ce filtre-presse se compose essentiellement d'un étrier muni d'une vis de serrage permettant le blocage des 3 parties du corps du filtre qui sont constituées :

. d'une embase percée d'un trou et dotée d'un ajutage par lequel s'écoule le filtrat. Cette embase supporte un tamis métallique de 60 à 80 mesh sur lequel est placé le papier filtre de 90 mm de diamètre (FANN ® référence N 87000100 Box de la société FANN INSTRUMENT Company),

. d'un cylindre de diamètre intérieur de 76,2 mm et 128 mm de hauteur,

. d'un couvercle muni d'une arrivée de gaz comprimé, dont l'étanchéité avec le cylindre est assurée à l'aide d'un joint plat, du même type que ceux placés sur l'embase.

Après 20 minutes sous pression dans le filtre, on mesure le volume d'eau collecté dans l'éprouvette placée sous le corps du filtre. Plus ce volume est faible, meilleure est la rétention.

Les résultats obtenus figurent dans le tableau 10 suivant :

### TABLEAU 10

|  | Essai n° | Viscosité mPa.s 10 T/minute | Viscosité mPa.s 100 T/minute | Volume (ml) en 20 minutes |
|---|---|---|---|---|
| Art antérieur | 77 | 5200 | 890 | 3,5 |
| Invention | 78 | 5000 | 800 | 3,2 |

La lecture du tableau 10 révèle qu'un polymère selon l'invention peut être utilisé comme agent de rétention dans l'industrie papetière.

**Revendications**

**1.** Homopolymères et/ou copolymères, en solution aqueuse, de monomères éthyléniquement insaturés **caractérisés en ce que** le taux de monomères résiduels est inférieur ou égal pour chacun des monomères à 300 ppm mesuré par rapport au produit en l'état à une concentration en matière sèche au moins égale à 38 % quelle que soit la composition en monomère.

**2.** Homopolymères et/ou copolymères selon la revendication 1 **caractérisés en ce que** les monomères éthyléniquement insaturés sont choisis parmi l'acide acrylique et/ou méthacrylique, itaconique, crotonique, fumarique, anhydride maléique ou encore, isocrotonique, aconitique, mésaconique, sinapique, undécylénique, angélique, et/ou leurs esters respectifs et/ou l'acide acrylamido méthyl propane sulfonique, l'acroléine, l'acrylamide, et/ou méthacrylamide, le méthacrylamido propyl triméthyl ammonium chlorure ou sulfate, le méthacrylate de triméthyl ammonium éthyl chlorure ou sulfate, ainsi que leurs homologues en acrylate er en acrylamide quaternisés ou non et/ou le diméthyldiallylchlorure, le méthallylsulfonate de sodium, le phosphate de méthacrylate ou acrylate d'éthylène ou propylène glycol, la vinylpyrrolidone et préférentiellement parmi l'acide acrylique et/ou méthacrylique et/ou l'anhydride maléique, les acrylates d'éthyle ou butyle, le méthacrylate de méthyle, l'acrylamide, le phosphate de méthacrylate d'éthylène glycol.

**3.** Polymère en solution aqueuse selon la revendication 1 ou 2 **caractérisé en ce qu'**il est sous forme totalement acide.

**4.** Polymère en solution aqueuse selon l'une quelconque des revendications 1 à 3 **caractérisé en ce qu'**il est partiellement ou totalement neutralisé par un ou plusieurs agents de neutralisation disposant d'une fonction monovalente choisis dans le groupe constitué par les cations alcalins, et de préférence parmi le sodium, le potassium, l'ammonium ou les amines primaires, secondaires ou tertiaires aliphatiques et/ou cycliques ou bien encore par un ou plusieurs agents de neutralisation d'une fonction polyvalente choisis dans le groupe constitué par les cations divalents alcalino-terreux de préférence le magnésium et le calcium, ou encore le zinc, de même que par les cations trivalents, dont en particulier l'aluminium, ou encore, par certains cations de valence plus élevée ainsi que des amines primaires et secondaires, aliphatiques et/ou cycliques ainsi que leurs combinaisons.

**5.** Polymère en solution aqueuse selon l'une quelconque des revendications 1 à 4 **caractérisé en ce qu'**il a une viscosité spécifique au plus égale à 10 et préférentiellement au plus égale à 3.

**6.** Utilisation du polymère en solution aqueuse selon l'une des revendications 1 à 5 comme agent de broyage et/ou de dispersion de matériaux minéraux en milieu aqueux.

**7.** Utilisation du polymère en solution aqueuse selon l'une quelconque des revendications 1 à 5 comme agent de rétention d'eau dans l'industrie papetière.

**8.** Utilisation du polymère en solution aqueuse selon l'une quelconque des revendications 1 à 5 comme agent séquestrant ou inhibiteur de précipitation et/ou d'incrustations minérales dans le traitement des eaux industrielles et/ou domestiques.

**9.** Utilisation du polymère en solution aqueuse selon l'une quelconque des revendications 1 à 5 comme agent anti-tartre et anti-corrosion dans le domaine de l'osmose inverse et de l'ultrafiltration.

**10.** Utilisation du polymère en solution aqueuse selon l'une quelconque des revendications 1 à 5 comme agent fluidifiant des fluides de forage.

**11.** Utilisation du polymère en solution aqueuse selon l'une quelconque des revendications 1 à 5 dans le domaine de la détergence comme agent anti-tartre et dispersant ne déstabilisant pas le degré chlorométrique des hypochlorites présents dans les formulations détergentes ou comme agent stabilisant des zéolithes ou bien encore comme builder.

**12.** Suspensions aqueuses de matériaux minéraux contenant le polymère selon l'une quelconque des revendications 1 à 5.

**13.** Utilisation des suspensions aqueuses de matériaux minéraux selon la revendication 12 dans le domaine du papier, de la peinture, de la céramique, des fluides de forage et de la détergence.